# EUROPEAN PATENT SPECIFICATION

(11) **EP 1 971 116 B1**
(45) Date of publication and mention of the grant of the patent: **13.09.2017**
(21) Application number: 08159158.8
(22) Date of filing: 31.03.2006
(51) Int. Cl.: H04M 1/725, G06F 1/16, H04M 1/60

(54) **MOBILE PHONE WITH SENSOR FOR DETECTION OF USER'S HANDLING**
MOBILTELEFON MIT SENSOR ZUR DETEKTIERUNG DER BENUTZERHANDHABUNG
TÉLÉPHONE MOBILE COMPORTANT UN CAPTEUR DE MANIPULATION DE L'USAGER

(43) Date of publication of application: 17.09.2008
(62) Divisional of application: 06112102.6
(73) Proprietor: DRNC HOLDINGS, INC., Wilmington, Delaware 19809 (US)
(72) Inventor: Augui, Stéphane, 75011, PARIS (FR); Ambone, Gilles, 92400, COURBEVOIE (FR); Fourestier, Vincent, 92400, COURBEVOIE (FR); Caruhel, Deny, 78510, TRIEL-SUR-SEINE (FR)
(74) Representative: Awapatent AB

(56) References cited:
- EP-A- 0 611 070
- DE-A1- 10 049 411
- GB-A- 2 368 483
- US-A- 5 329 577
- US-B2- 6 888 532
- PATENT ABSTRACTS OF JAPAN vol. 2003, no. 03, 5 May 2003 (2003-05-05) & JP 2002 325115 A (KYOCERA CORP), 8 November 2002 (2002-11-08)
- PATENT ABSTRACTS OF JAPAN vol. 2000, no. 03, 30 March 2000 (2000-03-30) & JP 11 355405 A (MITSUBISHI ELECTRIC CORP), 24 December 1999 (1999-12-24)

## Description

The present invention relates to an improvement in the area of mobile phones.

Today, known mobile phones are unable to detect their environmental conditions of use, except eventually when they are connected to a hand-free kit or to a battery loading device.

However, the interaction of a mobile phone with the user, namely the way it notifies to the user of an incoming call or messages, or the backlight used with the display, or even the orientation in which an image or a text is displayed on the screen, is not always adapted to the current situation.

As an example, if an alert occurs, multiple ways are possible to notify the user. The mobile phone can play a sound, or light the backlight of the display on, or actuate a vibrator, or more generally use any other possible way in order to catch the user's attention. Each of these methods can be very efficient in some situations but are not in some other. A sound will not be heard if an embedded TV or music is currently playing. Backlighting of the display is useless if the mobile is in a bag or in a pocket. Vibration has no interest if the mobile phone has no direct contact with the user.

EP611070, US5329577 and GB2368483 show examples of mobile phones. Further, DE10049411 relates to a hand-held device having recognition devices for determining whether the device is being held by a left or right handed person. A further example of prior art may be found in US6888532 entitled "Automatic orientation-based user interface for an ambiguous handheld device".

An aim of the invention is to optimize the working of a mobile phone, and more precisely to optimize the way it interacts with a user, depending on the way it is currently used. To this aim, the present invention proposes to make the mobile phone able to determine whether the user is currently holding the mobile phone in his hand or not, and to adapt some of the working of the mobile phone in response to this determination.

More precisely, the present invention relates to a mobile phone characterized in that it comprises at least one sensor adapted to detect by direct contact that a user is handling said mobile phone, and processing means adapted to modify at least an user's interface functionality of said mobile phone depending on the detection.

In order to get an accurate detection, one preferred embodiment according to the invention proposes the use of several sensors suitably located at various places around the mobile phone's housing.

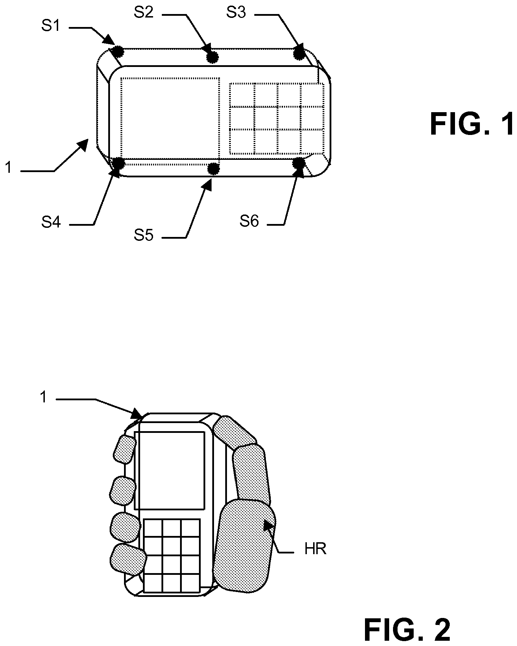

The scope of the invention is defined by appendend independent claim 1. Figure 1 shows an example of a mobile phone 1 according to the invention, on which six sensors S1 to S6 have been placed, and figure 2 shows a classical situation in which mobile phone 1 of figure 1 is held by the right hand RH of the user. Another sensor may be also provided at the back side of the housing, in order to detect a possible contact with the hand's palm in the situation shown on figure 2.

In one possible embodiment, sensors S1 to S6 are heat detectors. Due to the human skin property, the value measured by a sensor belongs to a specific range when the sensor is in contact with the skin. When the mobile is not held, all the sensors detect approximately the same value in a usual environment or some values which do not match with a handling. When held in the hand, the correlation of measured values permits to know that the mobile is currently held by the hand.

As shown on figure 1, sensors S1 to S6 are preferably located symmetrically with respect to a longitudinal axis of the mobile phone. Namely, in the example shown, three sensors S1 to S3 are located on one side of the mobile, while three other sensors S4 to S6 are located symmetrically on the other side. As it can be seen now from figure 2, hand and fingers positions are not uniform all around mobile phone 1. This asymmetric position gives different values on each sensor depending whether the mobile is held with the right hand or with the left hand. It is thus possible not only to detect that mobile phone is currently held by the user, but also to determine which hand actually holds the mobile phone.

This new approach gives supplementary information on the current way the user handles his mobile and, by keeping the history, on the general preference of the user. With such knowledge, the mobile phone can adapt the user's interface functionalities. As an example, processing means inside the mobile phone may inverse the soft key depending of the fact the user is left or right handed. By providing a detector at the front top of the mobile phone, the mobile phone can determine it is stuck to the ear and processing means can for instance modify the sound level, and/or avoid making the screen flashing since in this position, this cannot be seen by the user. Alternatively, even without any sensor provided at the front top of the mobile phone, it can be decided that sound level will be modified, for instance reduced, as soon as it has been detected that mobile phone is held by the user's hand.

On the contrary, by detecting that the mobile phone is not held by a user, and more precisely, as long as no detection that a user is currently handling the mobile phone, processing means may have been programmed to avoid the activation of vibrator upon reception of incoming event (call or message).

Another example of use is to detect in which orientation the mobile phone is actually held by the user's hand. Processing means can then decide to adapt the way of displaying an image (namely in landscape or in portrait mode) according to this detection.

In the previous example, the sensors were heat detectors. However, said sensors may be of many types, such as
- Piezoelectric detector
- Moisture detector
- Blood activity detector
and more generally every sensor which enables, through direct contact, the detection that the user's hand actually holds the mobile phone.

In another possible embodiment, sensors used are pressure sensors. By suitably locating one or several pressure sensors on one or both sides of the mobile phone, it is possible to detect if the user is currently holding the mobile. In addition, by detecting the pressure variation on one or several sensors, it is also possible to modify some user's interface functionalities, such as modifying the sound level depending on the pressure, or using a quick pressure variation in order to validate a particular action.

The man skilled in the art can clearly understand that the implementation of the invention is really easy to perform since the modification of user's interface functionalities depending on the output of the sensor(s) is made through software.

Other possibilities, including combining previous given examples, can be easily implemented without departing from the scope of the invention.

## Claims

1. A mobile phone (1) comprising at least one sensor (S1-S6) adapted to detect by direct contact that a user is handling the mobile phone, and processing means adapted to modify at least a user's interface functionality of the mobile phone depending on the detection, wherein the sensor is a pressure detector adapted to detect a pressure variation corresponding to a user holding the mobile phone, and **characterized in that** the processing means are adapted to modify a sound level of the mobile phone depending on the detected pressure variation.

2. A mobile phone according claim 1, wherein the processing means are adapted to determine whether the pressure variation detected by the pressure detector is a quick pressure variation and to validate a particular action if the processing means determines that the pressure variation detected by the pressure detector is the quick pressure variation.

## Patentansprüche

1. Mobiltelefon (1), das mindestens einen Sensor (S1-S6), der dafür ausgelegt ist, durch direkten Kontakt zu detektieren, dass ein Benutzer das Mobiltelefon hält, und Verarbeitungsmittel, die dafür ausgelegt sind, abhängig von der Detektion zumindest die Benutzerschnittstellen-Funktionalität des Mobiltelefons zu verändern, umfasst, wobei der Sensor ein Druckdetektor ist, der dafür ausgelegt ist, eine Druckänderung in Übereinstimmung mit einem Benutzer, der das Mobiltelefon hält, zu detektieren, und **dadurch gekennzeichnet, dass** die Verarbeitungsmittel dafür ausgelegt sind, einen Lautstärkepegel des Mobiltelefons abhängig von der detektierten Druckänderung zu verändern.

2. Mobiltelefon nach Anspruch 1, wobei die Verarbeitungsmittel dafür ausgelegt sind, zu bestimmen, ob es sich bei der Druckänderung, die durch den Druckdetektor detektiert wird, um eine schnelle Druckänderung handelt, und dafür, eine bestimmte Aktion zu validieren, wenn die Verarbeitungsmittel bestimmen, dass es sich bei der Druckänderung, die durch den Druckdetektor detektiert wird, um eine schnelle Druckveränderung handelt.

## Revendications

1. Téléphone mobile (1) comprenant au moins un capteur (S1-S6) adapté pour détecter par contact direct qu'un utilisateur est en train de manipuler le téléphone mobile, et des moyens de traitement adaptés pour modifier au moins une fonctionnalité d'interface d'utilisateur du téléphone mobile en fonction de la détection, dans lequel le capteur est un détecteur de pression adapté pour détecter une variation de pression correspondant à un utilisateur saisissant le téléphone mobile, et **caractérisé en ce que** les moyens de traitement sont adaptés pour modifier un niveau sonore du téléphone mobile en fonction de la variation de pression détectée.

2. Téléphone mobile selon la revendication 1, dans lequel les moyens de traitement sont adaptés pour déterminer si la variation de pression détectée par le détecteur de pression est une variation de pression rapide et pour valider une action particulière si les moyens de traitement déterminent que la variation de pression détectée par le détecteur de pression est la variation de pression rapide.
